# EUROPEAN PATENT APPLICATION

(11) **EP 4 418 377 A1**
(43) Date of publication of application: **21.08.2024**
(21) Application number: 23210629.4
(22) Date of filing: 17.11.2023
(51) Int. Cl.: H01M 8/241, H01M 8/2432, H01M 8/247, H01M 8/2475, H01M 8/248

(54) **FUEL CELL ASSEMBLY**

(30) Priority: 18.11.2022 CH 13752022
(71) Applicant: Inergio Technologies SA, 1015 Lausanne (CH)
(72) Inventor: Richard, Inès, 1015 Lausanne (CH); Conti, Luc, 1015 Lausanne (CH); Hadad, Mahmoud, 1015 Lausanne (CH)
(74) Representative: Rentsch Partner AG

(57) **Abstract**

Disclosed herein is a fuel cell assembly (1) comprising a fuel cell stack (2) comprising one or more fuel cells stacked in a stacking direction. The fuel cell assembly (1) further comprises a first and second clamping plate (3, 4) for clamping the fuel cell stack (2) between the first clamping plate (3) and the second clamping plate (4) in the stacking direction. The fuel cell assembly (1) further comprises at least one clamping element (5) for interconnecting the first and second clamping plate (3, 4). The clamping element (5) is made of a creep-resistant material.

## Description

### FIELD OF THE INVENTION

The present disclosure relates to a fuel cell assembly, in particular a high-temperature fuel cell assembly, according to the preamble of patent claims. Further disclosed is a clamping structure for a fuel cell stack.

### BACKGROUND OF THE INVENTION

Electricity supply is an important challenge in various industries and for various applications, each imposing a different set of requirements, including storage capacity, functionality even after many operation cycles, low weight, security of electricity supply, portability, among others. Fuel cells, in particular solid oxide fuel cells, have been identified as promising sources of electricity. Fuel cells are typically stacked and form part of a fuel cell assembly.

Despite recent advances, currently known fuel cells and fuel cell assemblies still suffer from a broad range of disadvantages, including their bulkiness and high weight. A further disadvantage is the high degree of heat dissipation, which compromises the efficiency of the known small-sized fuel cell assemblies. A further disadvantage is the high cost. Further disadvantage and challenges include the low degree of thermal and/or electric insulation, tear, wear or degradation after thermal cycling, the inability to tolerate extreme environmental conditions, such as low temperatures, which prevents off-grid applications, particularly in remote and environmentally exposed regions and areas.

### SUMMARY OF THE INVENTION

It is therefore an object of the disclosure to advance the state of the art in the area of fuel cell assemblies and preferably to overcome the disadvantages of the prior art fully or partially. In advantageous embodiments, a fuel cell assembly is provided, which is light and/or has a small volume. In advantageous embodiments, a fuel cell assembly is provided, which is highly performant. In advantageous embodiments, a fuel cell assembly is provided, which displays a high degree of thermal and/or electric insulation. In advantageous embodiments, a fuel cell assembly is provided, which functions even after numerous thermal cycles. In advantageous embodiments, a fuel cell assembly is provided, which functions under extreme environmental conditions, including cold outside temperatures. In advantageous embodiments, a fuel cell assembly is provided, which is creep-resistant, ideally creep-free. In advantageous embodiments, a fuel cell assembly is provided, which enables a constant and evenly distributed clamping force to be applied on a fuel cell stack. In advantageous embodiments, a fuel cell assembly is provided, which is free of relaxation.

According to the present disclosure, these objects are addressed by the features of the independent claim. In addition, further advantageous embodiments follow from the dependent claims and the description.

The present disclosure relates in a first aspect to a fuel cell assembly which comprises a fuel cell stack comprising one or more fuel cells stacked in a stacking direction. The fuel cell assembly further comprises a first and second clamping plate for clamping the fuel cell stack between the first clamping plate and the second clamping plate in the stacking direction. The fuel cell assembly further comprises at least one clamping element for interconnecting, particularly for clamping, the first and second clamping plate. The clamping element may e.g. be configured for interconnecting, particularly for clamping, the first and second clamping plate. The clamping element may e.g. comprise a screw and a nut. Advantageously, the clamping element may be made of a creep-resistant material. Typically, the fuel cell assembly may be a high-temperature fuel cell assembly. Typically, the one or more fuel cells may be high-temperature fuel cells, wherein the operating temperatures may for example be at least 200 °C, preferably at least 300 °C, more preferably at least 550 °C, more preferably from 600 °C to 1000 °C, such as from 600 °C to 800 °C.

In materials science, creep may be defined as the tendency of a solid material to move slowly or deform permanently under the influence of persistent mechanical stresses. It may, for example, occur as a result of long-term exposure to high levels of stress that are still below the yield strength of the material. Creep is typically more severe in materials that are subjected to heat for long periods and generally increases the temperature approaches the material's melting point. The rate of the creep deformation may be subject to various influences, including properties of the material, exposure time, exposure temperature and the applied structural load. Depending on the magnitude of the applied stress and its duration, the creep deformation may become so large that a component can no longer perform its function.

A creep-resistant material may thus be defined as a material having a creep deformation of less than 10e-2%, preferably less than 10e-6%, after up to 10'000 hours at operating conditions. The creep deformation is thereby measured in direction of the applied forces. For the fuel cell assembly, the creep deformation is defined in the stacking direction. The creep deformation is calculated relative to the length in direction of the applied forces before application of the forces. In other words, the creep deformation may be calculated by first subtracting an initial length in direction of the forces to be applied from the length in the same direction after the forces have been applied, an then dividing that difference in length by the initial length in direction of the forces. Thus after 10'000 hours at operating conditions the material has only a greater length of less than 10e-2%, preferably less than 10e-6%, with respect to the initial length (length before forces were applied) in direction of the applied forces.

The operating conditions typically include mechanical stresses between 10 MPa and 200 MPa and operating temperatures of at least 550 °C, preferably from 600 °C to 1000 °C. In case of the at least one clamping element, the creep deformation is measured in the stacking direction. In some embodiments, creep-resistant materials include ceramics, such as zirconia, alumina, magnesia, silicon nitride, silicon carbide, boron nitride, boron carbide or doped ceramics or composites based on these ceramics. Alternatively or additionally, the creep-resistant materials advantageously have a melting temperature above 2000 °C.

The fuel cell assembly may further comprise an insulation housing for thermally insulating the fuel cell stack. In a typical embodiment, the fuel cell stack, the first clamping plate, the second clamping plate and the at least one clamping element are arranged inside, particularly fully inside, the insulation housing. The insulation housing can, for example, thereby define an interior space, which is essentially fully encompassed by the insulation housing. The fuel cell stack, the first clamping plate, the second clamping plate and the at least one clamping element may be arranged within the interior space. Preferably, more than 95%, particularly more than 97%, more particularly more than 99%, more particularly 100%, of the combined volume of the fuel cell stack, the first clamping plate, the second clamping plate and the at least one clamping element is arranged inside the insulation housing. In a further embodiment, the insulation housing is not in contact with, particularly not in direct contact with, the fuel cell stack, the first clamping plate, the second clamping plate and the at least one clamping element. Advantageously, the fuel cell stack, clamping plates and the at least one clamping element are mounted in the insulation housing such that no force is transmitted through the insulation housing. In particular, advantageously, the clamping force acting on the fuel cell stack is not transmitted through the insulation. As an example, the insulation housing may fully encompass the fuel cell stack, the first clamping plate, the second clamping plate and the at least one clamping element. Advantageously, the insulation housing is arranged such that essentially no force acts on an inner or outer surface of the insulation housing. In an embodiment, the insulation housing is made of silica and/or silicon carbide.

One advantage of these embodiments is that they display a high degree of thermal insulation, in particular a high degree of thermal insulation of the fuel cell stack, including the fuel cells. It was realized as part of the present disclosure that in many previously known fuel cell assemblies, at least a portion of at least one of a fuel cell stack, a clamping plate and/or a clamping element is arranged outside an insulation housing. As an example, many previously known fuel cell assemblies comprise a screw, which extends through an insulation housing and is at least partially arranged on an exterior space of the insulation housing. It was realized as part of the present disclosure that this results in heat dissipation, which decreases the efficiency of the fuel cell assembly. By contrast, a further advantage of the embodiments of the present disclosure, such as those disclosed in the previous paragraph, is that they allow the insulation housing to be made of a highly performant, light and brittle material, which enhances the insulation properties, in particular regarding thermal insulation and/or electric insulation. By contrast, fuel cell assemblies of the prior art often include an insulation housing which must have a given mechanical stability, thus precluding certain materials to be used for the insulation housing, such as light-weight and less mechanically robust materials.

In some embodiments, the first clamping plate and/or the second clamping plate may be made of a creep-resistant material.

In some embodiments, the first clamping plate, the second clamping plate, the fuel cell stack and all components arranged between the fuel cell stack and either the first clamping plate or the second clamping plate have an overall thermal expansion coefficient in the stacking direction that is within 30%, preferably within 20%, more preferably within 10%, more preferably within 5%, of the thermal expansion coefficient, in the stacking direction, of the clamping element. As an example, in an embodiment, the first clamping plate, the second clamping plate and the fuel cell stack have an overall thermal expansion coefficient in the stacking direction that is within 30%, preferably within 10%, more preferably within 5%, of the thermal expansion coefficient, in the stacking direction, of the clamping element.

In some embodiments, the first clamping plate and/or the second clamping plate and/or the clamping element are made of a material having a matching thermal expansion coefficient. In a typical embodiment, the first clamping plate and/or the second clamping plate and/or the clamping element are made of a material having a similar thermal expansion coefficient. Advantageously, similar means that the thermal expansion coefficient is within 30%, preferably within 20%, more preferably within 10%, more preferably within 5%, of the thermal expansion coefficient of the fuel cell stack, particularly in the stacking direction. Depending on the application, the first clamping plate and/or the second clamping plate and/or the clamping element can be made of a material having a thermal expansion coefficient is in the range from 1 × 10⁻⁶/K to 20 × 10⁻⁶/K, particularly from 5 × 10⁻⁶/K to 13 × 10⁻⁶/K. The material of the first clamping plate and/or the material of the second clamping plate and/or the material of the clamping element may e.g. be a ceramic material. The ceramic material can be a ceramic matrix composite, which preferably includes a matrix of aluminum oxide, zirconium oxide, yttrium oxide-stabilized zirconium dioxide, or silicon carbide.

One advantage of these embodiments is that they minimize thermal dissipation and, as a result, heat loss and thus increase the efficiency. The embodiments were also found to allow maintaining a constant clamping force during heating, operation and cooling of the fuel cell assembly. As a result, physical stress is minimized and the fuel cell assembly displays high durability, even after numerous heating and cooling cycles. Furthermore, undesired physical deformations, such as creeping and relaxation, are minimized. A further advantage is that an appropriate pressure is generated and maintained during operation of the fuel cell assembly.

Depending on the application, the fuel cell assembly can comprise at least one force transmission plate. The force transmission plate serves to provide an even distribution of the clamping force, in particular aver the surface of the fuel cell stack. Typically, the clamping force acts in the stacking direction.

Depending on the application, the fuel cell assembly can comprise a first force transmission plate arranged between the fuel cell stack and the first clamping plate. Additionally or alternatively, the fuel cell assembly may comprise a second force transmission plate arranged between the fuel cell stack and the second clamping plate. Advantageously, the first force transmission plate is arranged between the fuel cell stack and the first clamping plate with respect to the stacking direction and/or the second force transmission plate is arranged between the fuel cell stack and the second clamping plate with respect to the stacking direction.

One advantage of these embodiments is that by having at least one, preferably two, force transmission plate and at least one, preferably two, clamping plate, geometry and material of each plate may be selected such that the overall thermomechanic properties of the plates complement each other.

A ceramic material as used herein is defined as any non-metallic, non-organic material, particularly engineering material. In an embodiment, the ceramic material is defined as oxides, carbides, borides, nitrides and silicides, and any mixture thereof. In an embodiment, at least 80 wt.-%, preferably at least 90 wt.-%, more preferably at least 95 wt.-%, more preferably at least 98 wt.-%, more preferably 100 wt.-%, of the ceramic material is any one or any combination of the following: aluminum oxide, zirconium oxide, yttrium oxide-stabilized zirconium dioxide, silicon carbide, barium titanate, strontium titanate, silicon aluminum oxynitride, silicon nitride, steatite, titanium carbide, uranium oxide, yttrium barium copper oxide or zinc oxide. In an embodiment, the ceramic material is selected from one or more of the following: aluminum oxide, zirconium oxide, yttrium oxide-stabilized zirconium dioxide, or silicon carbide. In an embodiment, the ceramic material is selected such that it has a thermal expansion coefficient from 1 × 10⁻⁶/K to 20 × 10⁻⁶/K, particularly from 5 × 10⁻⁶/K to 13 × 10⁻⁶/K. In an embodiment, the ceramic material is selected such that it has a Young modulus from 100 GPa to 400 GPa.

A fuel cell as disclosed herein typically comprises an electrolyte electrode assembly. The electrolyte electrode assembly includes an anode, a cathode and an electrolyte interposed between the anode and the cathode. In an embodiment, each fuel cell further comprises at least one, preferably at least two, interconnector. In an embodiment, the electrolyte electrode assembly is arranged between two interconnectors, preferably in the stacking direction. In an embodiment, the fuel cells include one or more of the following: solid oxide fuel cell, molten carbonate fuel cell, phosphoric acid fuel cell, proton-exchange membrane fuel cell and alkaline fuel cell. In an embodiment, the fuel cell is one of the following: solid oxide fuel cell, molten carbonate fuel cell, phosphoric acid fuel cell, proton-exchange membrane fuel cell and alkaline fuel cell. In an embodiment, the fuel cell is a solid oxide fuel cell. The interconnector may, for example, be a separator. The interconnector interconnects and separates adjacent fuel cells. In an embodiment, the interconnector has a thickness from 0.1 mm to 3 mm.

In an embodiment, the fuel cell stack comprises from one to 200 fuel cells, particularly from one to 100 fuel cells, preferably solid oxide fuel cells. In an embodiment, the stacking direction defines a z-direction. In an embodiment, each fuel cell has an upper surface and a lower surface, wherein the lower surface is typically opposite the upper surface and has a distance from the upper surface corresponding to a thickness of the fuel cell. The thickness typically extends along the z-direction.

In an embodiment, the fuel cell stack has a bottom surface and a top surface opposite the bottom surface. In an embodiment, the fuel cell stack has a thickness extending along the z-direction. In an embodiment, the fuel cell stack has a volume from 1000 mm³ to 0.3 m³, preferably from 50 cm³ to 50,000 cm³.

In some embodiments, the thermal expansion coefficient refers to the volumetric expansion. In preferred embodiments, the thermal expansion coefficient refers to linear expansion, in particular to the expansion in the stacking direction. In some embodiments, the thermal expansion coefficient is low. The thermal expansion coefficient may, for example, be in a range from 1 × 10⁻⁶/K to 20 × 10⁻⁶/K, particularly from 5 × 10⁻⁶/K to 13 × 10⁻⁶/K. The thermal expansion coefficient values provided herein refer to 20 °C. The thermal expansion coefficient may, for example, be controlled by choosing and/or modifying an appropriate material, such as by doping or mixing different ceramic materials.

In an embodiment, the clamping element is configured for interconnecting the first and second clamping plate. As an example, in an embodiment, the clamping element is connected, preferably directly connected, to the first clamping plate and the second clamping plate. By interconnecting the first and second clamping plate, the clamping element may typically exert a clamping force. Advantageously, the clamping force exerted by the clamping element is essentially constant, particularly essentially constant within the temperature range from 600 °C to 1000 °C.

In an embodiment, the first clamping plate and/or the second clamping plate each have a thermal expansion coefficient that is within 20%, preferably within 10%, more preferably within 5% of the thermal expansion coefficient of the fuel cell stack. In an embodiment, the first clamping plate and/or the second clamping plate each have a thermal expansion coefficient from 1 × 10⁻⁶/K to 20 × 10⁻⁶/K, particularly from 5 × 10⁻⁶/K to 13 × 10⁻⁶/K. In an embodiment, the first clamping plate and/or the second clamping plate each have a Young modulus from 100 GPa to 400 GPa. In an embodiment, the first clamping plate and/or the second clamping plate each have a thickness from 2 mm to 20 mm. It is understood that the thermal expansion coefficient, the Young modulus and the thickness may be selected for the first clamping plate independently of the second clamping plate. In other words, the first and second clamping plate may have the same or a different thermal expansion coefficient.

In an embodiment, the first force transmission plate and/or the second force transmission plate each have a thickness from 0.5 mm to 10 mm, wherein the thickness preferably extends along the stacking direction. In an embodiment, the first force transmission plate and/or the second force transmission plate each have a thermal expansion coefficient that is within 20%, preferably within 10%, more preferably within 5% of the thermal expansion coefficient of the fuel cell stack. In an embodiment, the first force transmission plate and/or the second force transmission plate each have a thermal expansion coefficient from 1 × 10⁻⁶/K to 20 × 10⁻⁶/K, particularly from 5 × 10⁻⁶/K to 13 × 10⁻⁶/K. In an embodiment, the first force transmission plate and/or the second force transmission plate each have a Young modulus from 50 MPa to 400 GPa. In an embodiment, the first force transmission plate and/or the second force transmission plate each have a flatness, under 200 micrometers.

One advantage of these embodiments is that a constant clamping force on the fuel cell stack is maintained. A further advantage is that these embodiments ensure an even distribution of the clamping force, in particular an even distribution of the clamping force over the surface of the fuel cell stack, particularly over the upper surface of the fuel cell stack and/or over the lower surface of the fuel cell stack. A further advantage is that thermomechanical stress upon thermal cycling is minimized. These advantages contribute to high performance and durability of the fuel cell assembly.

In an embodiment, the first clamping plate is in direct contact with the first force transmission plate. Additionally or alternatively, in an embodiment, the second clamping plate is in direct contact with the second force transmission plate. The first clamping plate may also be in indirect contact with the first force transmission plate, such as through the intermediacy of one or more other structural elements, components or parts. Similarly, first clamping plate may also be in indirect contact with the first force transmission plate, such as through the intermediacy of one or more other elements.

In an embodiment, the first force transmission plate has the same thermal expansion coefficient as the first clamping plate. Additionally or alternatively, in an embodiment, the second force transmission plate has the same thermal expansion coefficient as the second clamping plate. The same, in this context, means that the thermal expansion coefficient of the first force transmission plate, respectively the second force transmission plate, is within 20% of, particularly within 10% of, more particularly within 5% of, more particularly within 3% of, such as identical to, the thermal expansion coefficient of the first clamping plate, respectively the second clamping plate.

One advantage of these embodiments is that they ensure matching thermomechanical properties and that degradation is minimized. Furthermore, these embodiments ensure a direct transmission of the clamping force from the first clamping plate to the first force transmission plate and/or from the second clamping plate to the second force transmission plate.

In an embodiment, the first force transmission plate has an inner surface facing the fuel cell stack and the second force transmission plate has an inner surface facing the fuel cell stack, and the inner surface of the first force transmission plate and the inner surface of the second force transmission plate are essentially parallel to each other. In an embodiment, the first force transmission plate has an inner surface facing an upper surface of the fuel cell stack, wherein the inner surface of the first force transmission plate and the upper surface of the fuel cell stack are essentially parallel to each other. In an embodiment, the second force transmission plate has an inner surface facing a lower surface of the fuel cell stack, wherein the inner surface of the second force transmission plate and the lower surface of the fuel cell stack are essentially parallel to each other. In an embodiment, the inner surface of the first force transmission plate, the inner surface of the second force transmission plate, the upper surface of the fuel cell stack and the lower surface of the fuel cell stack are essentially parallel to each other. In an embodiment, essentially parallel means that each angle defined by the two planes of any of the surfaces is less than 30°, preferably less than 20°, more preferably less than 10°, more preferably less than 5°, more preferably less than 2°, more preferably 0°. In an embodiment, the inner surface or the first force transmission plate and/or the inner surface of the second force transmission plate is planar and are preferably orthogonal to the stacking direction. In an embodiment, the upper surface of the fuel cell stack and the lower surface of the fuel cell stack are planar and are preferably orthogonal to the stacking direction. The upper surface of the fuel cell stack is typically opposite the lower surface of the fuel cell stack.

One advantage of these embodiments is that they enable maintaining a constant clamping force. Furthermore, they contribute to the clamping force being evenly distributed over the upper and lower surface of the fuel cell stack. As a result, mechanical stress is evenly distributed and, consequently, any undesired deformations such as relaxation or creeping are minimized.

In an embodiment, the upper surface of the fuel cell stack and the lower surface of the fuel cell stack are each from 40 mm × 40 mm to 150 mm × 150 mm.

In an embodiment, the first force transmission plate is in direct contact with the fuel cell stack. Additionally or alternatively, in an embodiment, the second force transmission plate is in direct contact with the fuel cell stack. In an embodiment, the contour of the inner surface of the first force transmission plate is complementary to the contour of the upper surface of the fuel cell stack. In an embodiment, the contour of the inner surface of the second force transmission plate is complementary to the contour of the lower surface of the fuel cell stack. These embodiments ensure that the clamping force is directly transmitted to the fuel cell stack, without any further influence on the clamping force. Furthermore, these embodiments ensure that the clamping force is evenly distributed over the upper surface and lower surface of the fuel cell stack.

Depending on the application the fuel cell assembly may further comprise at least one intermediate layer serving as sealing, particularly for sealing the fuel cell stack. In an embodiment, the fuel cell assembly further comprises a first intermediate layer. Depending on the application, the first intermediate layer may be arranged between the first force transmission plate and the fuel cell stack. Depending on the application, the first intermediate layer may comprise, preferably be made of, a mica sheet. Additionally or alternatively, in an embodiment, the fuel cell assembly further comprises a second intermediate layer. Depending on the application, the second intermediate layer may be arranged between the second force transmission plate and the fuel cell stack. Depending on the application, the second intermediate layer may comprise, preferably be made of, a mica sheet. One advantage of these embodiments is that the contours of the inner surface of the first force transmission plate and the upper surface of the fuel cell stack and/or the contours of the inner surface of the second force transmission plate and the lower surface of the fuel cell stack may be matched by the first intermediate layer and/or the second intermediate layer. The intermediate layer may therefore prevent leakage caused by surface roughness. The intermediate layer may also contribute to matching of thermomechanical properties, in particular relating to thermal expansion behavior.

A mica sheet is a sheet made of mica. Mica as used herein includes any one or combinations in a family of related platy minerals, including but not limited to muscovite, biotite, phlogopite, lepidolite, seraphinite (clinochore), fuchsite, and zinnwaldite. Mica includes magnesium silico-aluminates. Micas include hydrous potassium-aluminum silicate minerals. There are more than 20 chemically distinct mica species with considerable variance in geologic occurrence, but essentially the same crystal structure. The micas crystallize with a sheet structure, the sheets being held together by relatively weak bonds resulting in the perfect basal cleavage of the micas. Micas may be calcinated or uncalcinated. In an embodiment, the mica sheet is the commercially available product thermiculite or MC-5000HT.

In an embodiment, the fuel cell assembly further comprises at least one thermal expansion adjustment plate configured to maintain a designated clamping force on the fuel cell stack. The at least one thermal expansion adjustment plate may be arranged between the clamping element and the first clamping plate. Additionally or alternatively, the at least one thermal expansion adjustment plate may be arranged between the clamping element and the second clamping plate. Additionally or alternatively, the at least one thermal expansion adjustment plate may be comprised in the first intermediate layer. Additionally or alternatively, the at least one thermal expansion adjustment plate may be comprised in the second intermediate layer. Advantageously, the material and thickness of the thermal expansion adjustment plate is selected such that the fuel cell stack, the first clamping plate and the second clamping plate and, where present, the first force transmission plate and the second force transmission plate have an overall thermal expansion coefficient that is similar to the thermal expansion coefficient of the clamping element. Similar, in this context, preferably means that the overall thermal expansion coefficient is within 20%, preferably within 10%, more preferably within 5%, of the thermal expansion coefficient of the clamping element.

One advantage of these embodiments is that they enable matching of thermomechanical properties, in particular relating to thermal expansion behavior. As an example, depending on the thermal expansion behavior of the other components involved in exerting and maintaining the clamping force on the fuel cell stack, a thermal expansion adjustment plate of an appropriate thickness may be provided such that the thermal expansion behavior of the clamping element matches that of those components that are clamped by the clamping element. This enables an even distribution of the clamping force. Furthermore, these embodiments minimize the mechanical stress associated with thermocycling. Additionally, undesired physical deformations, such as creeping and/or relaxation are minimized.

In further embodiments, the material of the thermal expansion adjustment plate may be selected such that the thermal expansion coefficient of the thermal expansion adjustment plate is within 20%, preferably within 10%, more preferably within 5%, of the thermal expansion coefficient of the materials of which those components that are directly adjacent to the thermal expansion adjustment plate are made of.

Advantageously, the first force transmission plate is planar with respect to the fuel cell stack. Additionally or alternatively, the second force transmission plate is advantageously planar with respect to the fuel cell stack.

In an embodiment, the first clamping plate is planar, convex or concave with respect to the fuel cell stack. Additionally or alternatively, in an embodiment, the second clamping plate is planar, convex or concave with respect to the fuel cell stack. The first clamping plate and second clamping plate may, independently of each other, be chosen such that they are planar, convex or concave.

Having a convex or concave shape decreases the shear forces induced by the clamping and will lead to a lower risk of failure. Additionally, an advantage of a concave shape is that the concavity may be controlled such that it compensates the deformation due to the clamping of the at least one clamping element, such that after compression, the clamping plate does not become concave in an uncontrolled fashion, which may lead to an uneven distribution of the clamping force.

As an example of concave surface, the angle between the tangents on two outermost points of the concave surface may be from 90° to 180°, preferably from 150° to 180°. An example of a convex surface, the angle between the tangents on two outermost points of the convex surface may be from 270° to 180°, preferably from 210° to 180°.

In an embodiment, the insulation housing has a density of less than 400 kg/m³, preferably less than 300 kg/m³, more preferably less than 275 kg/m³. One advantage of this is that the insulation housing and, consequently, the fuel cell assembly, are light. In an embodiment, the insulation housing has a resistance to compression of less than 1 MPa, preferably less than 0.5 MPa, more preferably less than 0.3 MPa. In an embodiment, the insulation housing has a thermal conductivity of less than 0.5 W/mK, preferably less than 0.1 W/mK, more preferably less than 0.03 W/mK. One advantage of this is that a high degree of thermal insulation is ensured. In an embodiment, the insulation housing is electrically insulating. As an example, the insulation housing may be configured for electrically insulating the fuel cell stack.

In an embodiment, the fuel cell assembly comprises at least two, preferably at least four, clamping elements arranged pairwise opposite of each other with respect to the fuel cell stack. In an embodiment, each clamping element comprises at least one screw and at least one nut. In an embodiment, the clamping means, such as the screws and nuts, have a thermal expansion coefficient from 1 × 10⁻⁶/K to 20 × 10⁻⁶/K, preferably from 5 × 10⁻⁶/K to 13 × 10⁻⁶/K. In an embodiment, the at least one clamping element is made of a ceramic material.

In an embodiment, the first force transmission plate comprises a reformer chamber and/or a combustion chamber. In an embodiment, the second force transmission plate comprises a reformer chamber and/or a combustion chamber.

In an embodiment, the fuel cell assembly has a mass of less than 3 kg, preferably less than 2 kg, more preferably less than 1 kg, even more preferably less than 500 g.

In an embodiment, the fuel cell assembly further comprises a control unit configured for modulating a power output of the fuel cell assembly, and/or for modulating a temperature of the fuel cell assembly. In an embodiment, the control unit is configured for ensuring that an essentially constant electrical power is drawn from the fuel cell assembly. In an embodiment, the control unit is configured for adapting a fluid intake of the fuel cell assembly in response to an electrical power output of the fuel cell assembly.

In a typical embodiment, the fuel cell assembly comprises a fuel supply pipe for supplying the at least one fuel cell with fuel, particularly fuel gas. The fuel gas may comprise hydrogen, methane, ethane, propane, butane, air, water, CO₂, oxygen, nitrogen, argon, preferably hydrogen, propane or butane, or any combination thereof. The fuel supply pipe is in fluidic communication with the fuel cell stack. In an embodiment, the fuel supply pipe is connected to the fuel cell stack. In an embodiment, the fuel supply pipe extends through the first or second force transmission plate. In an embodiment, the fuel supply pipe extends through the clamping assembly. In a typical embodiment, the fuel supply pipe extends through the insulation housing. The fuel supply pipe may extend along the stacking direction or along another direction.

In a typical embodiment, the fuel cell assembly comprises an air and/or oxygen supply pipe for supplying the at least one fuel cell with air and/or oxygen. The air and/or oxygen supply pipe is in fluidic communication with the fuel cell stack. In an embodiment, the air and/or oxygen supply pipe is connected to the fuel cell stack. In an embodiment, the air and/or oxygen supply pipe extends through the first or second force transmission plate. In an embodiment, the air and/or oxygen supply pipe extends through the clamping assembly. In a typical embodiment, the air and/or oxygen supply pipe extends through the insulation housing. The air and/or oxygen supply pipe may extend along the stacking direction or along another direction.

In a typical embodiment, the fuel cell assembly comprises one or more exhaust pipes for discharging reaction products and/or unreacted reactants from the fuel cell stack. As an example, the reaction products may include one or more of carbon monoxide, carbon dioxide and water. As an example, the unreacted reactants may include one or more of oxygen, hydrogen, methane, ethane, propane, butane. In an embodiment, the exhaust pipe is in fluidic communication with the fuel cell stack. In an embodiment, the exhaust pipe is connected to the fuel cell stack. In an embodiment, the exhaust pipe extends through the first or second force transmission plate. In an embodiment, the exhaust pipe extends through the clamping assembly. In a typical embodiment, the exhaust pipe extends through the insulation housing. The exhaust pipe may extend along the stacking direction or along another direction. In an embodiment, the exhaust pipe is arranged opposite to the oxygen supply pipe and the fuel supply pipe.

In a typical embodiment, the fuel cell assembly comprises at least one anode connector and at least one cathode connector for supplying the generated electricity to an external power unit, wherein the anode connector is electrically connected to the anode of the at least one fuel cell and the cathode connector is electrically connected to the cathode of the at least one fuel cell. In a typical embodiment, the anode connector and the cathode connector extend through the insulation housing. The power unit may, for example, be an energy consumer, such as an engine.

In an embodiment, the fuel cell assembly comprises one or more bypass electrodes. The bypass electrodes can bypass selected fuel cells and therefore allow the fuel cell assembly to continue operating in case where one or more fuel cells operate improperly or are damaged.

The present disclosure relates in a second aspect to a clamping structure for a fuel cell stack comprising one or more fuel cell stacks in a stacking direction. The clamping structure comprises a first clamping plate and a second clamping plate for clamping the fuel cell stack between the first clamping plate and the second clamping plate in the stacking direction. The clamping structure further comprises at least one clamping element for interconnecting the first clamping plate and the second clamping plate.

In an embodiment, the clamping structure further comprises an insulation housing for thermally insulating the fuel cell stack. In an embodiment, the first clamping plate, the second clamping plate and the at least one clamping element are arranged inside the insulation housing.

In an embodiment, the first clamping plate and/or the second clamping plate and/or the clamping element are made of a material having a thermal expansion coefficient in a range from 1 × 10⁻⁶/K to 20 × 10⁻⁶/K, particularly from 5 × 10⁻⁶/K to 13 × 10⁻⁶/K. Additionally or alternatively, In an embodiment, the first clamping plate and/or the second clamping plate and/or the clamping element are made of a material having a low thermal conductivity.

The embodiments previously disclosed in the context of the fuel cell assembly of the first aspect of the disclosure, in particular all embodiments relating to the first clamping plate, the second clamping plate, the fuel cell stack, the clamping element, the insulation, the first force transmission plate, the second force transmission plate, the first intermediate layer, the second intermediate layer and the thermal expansion adjustment plate, among others, also apply to the clamping structure according to the second aspect of the disclosure.

It is to be understood that both the foregoing general description and the following detailed description present embodiments, and are intended to provide an overview or framework for understanding the nature and character of the disclosure. The accompanying drawings are included to provide a further understanding, and are incorporated into and constitute a part of this specification. The drawings illustrate various embodiments, and together with the description serve to explain the principles and operation of the concepts disclosed.

### BRIEF DESCRIPTION OF THE DRAWINGS

The disclosure described herein will be more fully understood from the detailed description given herein below and the accompanying drawings which should not be considered limiting to the invention described in the appended claims. The drawings are showing:
- Fig. 1: shows an embodiment of the fuel cell assembly disclosed herein having concave clamping plates;
- Fig. 2: shows an embodiment of the fuel cell assembly disclosed herein having convex clamping plates;
- Fig. 3: shows an embodiment of the fuel cell assembly disclosed herein having planar clamping plates and intermediate layers;
- Fig. 4: shows an embodiment of the fuel cell assembly disclosed herein having a thermal expansion adjustment plate.

### DESCRIPTION OF THE EMBODIMENTS

Reference will now be made in detail to certain embodiments, examples of which are illustrated in the accompanying drawings, in which some, but not all features are shown. Indeed, embodiments disclosed herein may be embodied in many different forms and should not be construed as limited to the embodiments set forth herein; rather, these embodiments are provided so that this disclosure will satisfy applicable legal requirements. Whenever possible, like reference numbers will be used to refer to like components or parts.

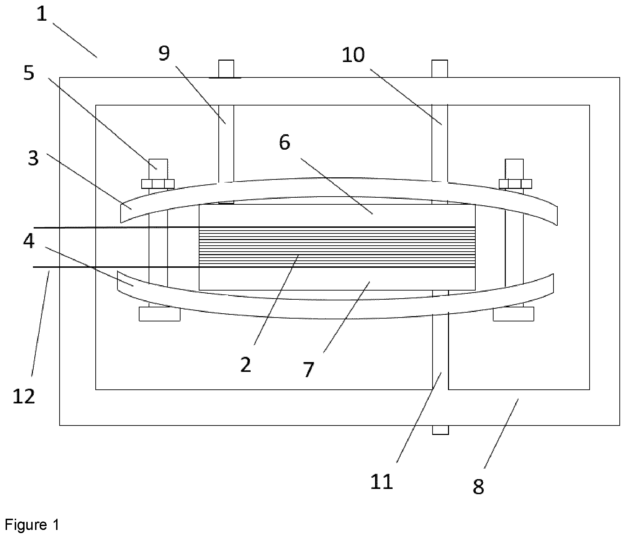

**Figure 1-4** show different embodiments of a fuel cell assembly 1. The fuel cell assemblies 1 each comprise a fuel cell stack 2 of fuel cells. In the illustrated embodiments, the fuel cells are high-temperature solid oxide fuel cells. The solid oxide fuel cell stack 2 is clamped between a first clamping plate 3 and a second clamping plate 4, and optionally between a first force transmission plate 6 and a second force transmission plate 7. The first and second force transmission plates 6 and 7 are both arranged between the first and second clamping plates 3 and 4. The clamping force which acts on the fuel cell stack 2 is exerted by clamping elements 5. The illustrated embodiments comprise four different clamping elements 5. However other amounts are also possible. Each clamping element 5 comprises a means for clamping and maintaining a tightness. In the illustrated embodiment, each clamping element 5 comprises a screw and a nut.

In the illustrated embodiments, the clamping elements 5, the first and second force transmission plates 6 and 7 and the first and second clamping plates 3 and 4 are made of a ceramic material.

The fuel cell assembly 1 of the different illustrated embodiments further comprise a fuel supply pipe 9, an oxygen supply pipe 10 and an exhaust pipe 11.

The illustrated fuel cell assemblies 1 furthermore comprise an insulation housing 8 for thermal insulation. The first and second clamping plates 3 and 4, the first and second force transmission plates 6 and 7, the clamping element 5 and the fuel cell stack 2 are all arranged inside the insulation housing 8. In other words, the insulation housing 8 full encompasses the first and second clamping plates 3 and 4, the first and second force transmission plates 6 and 7, the clamping element 5 and the fuel cell stack 2. In still other words, no clamping forces acting on the fuel cell stack 2 are transmitted through the insulation housing 8.

Having a fuel cell stack 2 entirely inside the insulation housing 8 without the need of screws passing through nor of putting pressure through the insulation housing 8 to clamp the fuel cell stack 2 allows to use highly performant, light and brittle insulation and remove the limitation to hard, less performant and heavier insulations. This new housing allows also to electrically insulate the stack from the outside.

The fuel cell stack 2, the first and second clamping plates 3 and 4 and the first and second force transmission plates 6 and 7 are placed in a thermal insulation 8 with only electrical connection and fuel inlet 9, air inlet 10 and exhaust 11 passing through the insulation.

All the parts are therefore at high operating temperature, typically between 600 °C and 1000 °C and the system is maintaining itself compressed with ceramic materials.

Typically the solid oxide fuel cell (SOFC) stack 2 comprises interconnects with a thickness between 0.5 mm to 3 mm and cells with a surface between 40x40 to 150x150mm, compressed between two ceramic plates. The stack 2 contains typically between 1 to 100 cells. The ceramic plates are compressed by ceramic screws and nuts around and act as a spring to transfer the force from the screws to the stack.

The rigid ceramic plates transfer and even the force from the ceramic plates to the stack 2. The stack 2 is therefore exposed to an even and constant pressure on its surface. Ceramic plate 6 can contain two pipes connections 9 and 10 sealed typically with glass materials. It is possible to extend the number of pipes connection and add some mixing microfluidic in that plate to pre-mix gases before the stack or the reforming chamber.

Ceramic plates 3 and 4 can be either flat, convex or concave with a thickness between 2 mm to 20 mm. Typically with a thermal expansion coefficient (CTE) between 5e-6 to 13e-6/K and a Young modulus between 100 to 400 GPa.

Ceramic plates 6 and 7 may have a flatness under 200 um and a thickness between 0.5 to 10 mm. Typically with a CTE between 5e-6 to 13e-6/K and a Young modulus between 100 to 400 GPa.

The screws and nuts are ceramic based. Typically with a CTE between 5e-6 to 13e-6/K and a Young modulus between 100 to 400 GPa.

Having no compression needed through insulation allows to use brittle with low compression strength insulation. Typically an insulation for SOFC would have a resistance to compression higher than 1MPa, a conductivity higher than 0.1 W/m*K and a density higher than 350kg/m3. By allowing brittle insulation, we can use an insulation with a resistance to compression lower than 0.3MPa, a thermal conductivity typically lower than 0.03W/m*K and a density lower than 275kg/m3. Therefore, a factor of 3 in size is gained and a factor of 4 in weight is gained.

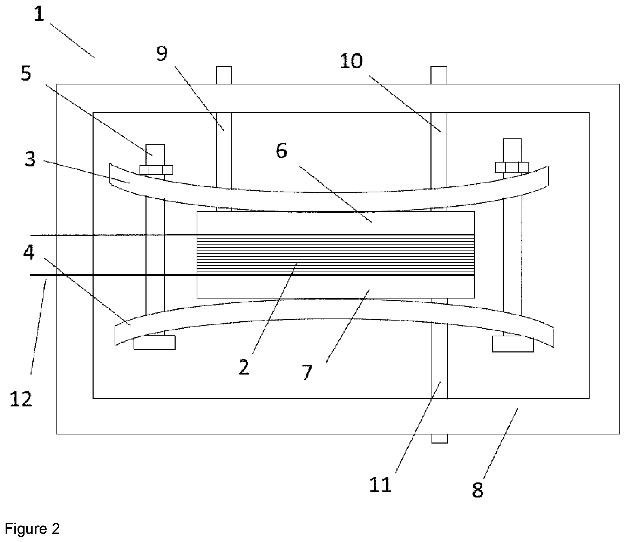

In the fuel cell assembly 1 shown in **figure 1****,** the first and second clamping plate 3 and 4 each have a concave shape (bend towards from the fuel cell stack). By contrast, in the fuel cell assembly shown in **figure 2****,** the first and second clamping plate 3 and 4 each have a convex shape (bend away from the fuel cell stack).

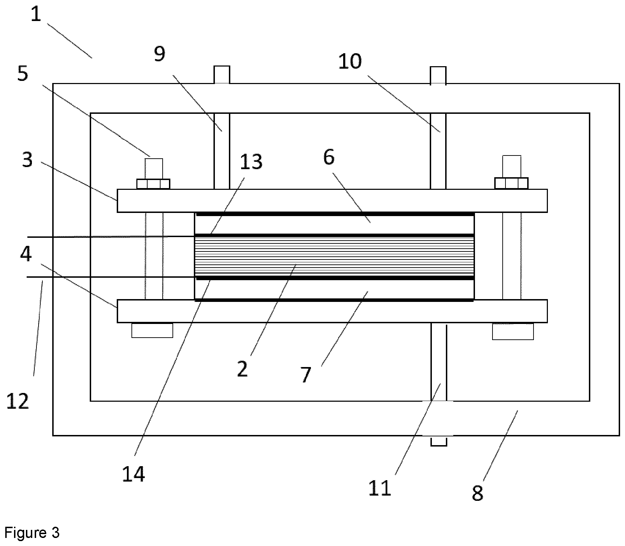

In the fuel cell assembly 1 shown in **figure 3****,** the first and second clamping plate 3 and 4 are each planar. The fuel cell assembly 1 shown in figure 3 furthermore comprise a first intermediate layer 13 and a second intermediate layer 14. The first intermediate layer 13 is arranged between the first force transmission plate 6 and the fuel cell stack 2. The second intermediate layer 14 is arranged between the second force transmission plate 7 and the fuel cell stack 2. The illustrated embodiments also comprises two further intermediate layers, which are arranged between the first force transmission plate 6 and the first clamping plate 3, as well as between the second force transmission plate 7 and the second clamping plate 4.

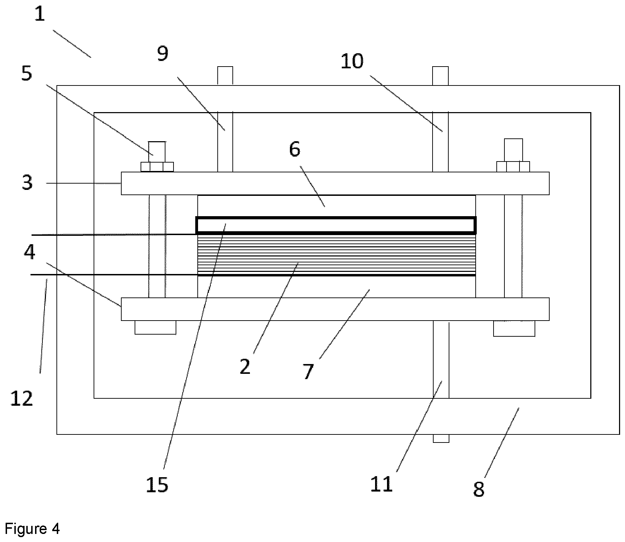

The fuel cell assembly 1 shown in **figure 4** comprises a thermal expansion adjustment plate 15 which is arranged on top of the fuel cell stack 2.

### LIST OF DESIGNATIONS

- 1: fuel cell assembly
- 2: fuel cell stack
- 3: first clamping plate
- 4: second clamping plate
- 5: clamping element
- 6: first force transmission plate
- 7: second force transmission plate
- 8: insulation housing
- 9: fuel supply pipe
- 10: oxygen supply pipe
- 11: exhaust pipe
- 12: interconnector
- 13: first intermediate layer
- 14: second intermediate layer
- 15: thermal expansion adjustment plate

## Claims

1. Fuel cell assembly (1) comprising
- a fuel cell stack (2) comprising one or more fuel cells stacked in a stacking direction;
- a first and second clamping plate (3, 4) for clamping the fuel cell stack (2) between the first clamping plate (3) and the second clamping plate (4) in the stacking direction; and
- at least one clamping element (5) for interconnecting the first and second clamping plate (3, 4), wherein the clamping element (5) is made of a creep-resistant material.

2. Fuel cell assembly (1) according to claim 1, wherein the first clamping plate (3), the second clamping plate (4) and the fuel cell stack (2) have an overall thermal expansion coefficient in the stacking direction that is within 30%, preferably within 10%, more preferably within 5%, of the thermal expansion coefficient, in the stacking direction, of the clamping element (5).

3. Fuel cell assembly (1) according to claim 1 or 2, wherein the first clamping plate (3) and/or the second clamping plate (4) and/or the clamping element (5) are made of a material having a similar thermal expansion coefficient, wherein the thermal expansion coefficient is preferably within 30%, preferably within 10%, more preferably within 5%, of the thermal expansion coefficient of the fuel cell stack (2) in the stacking direction.

4. Fuel cell assembly (1) according to claim 3, wherein the material of the first clamping plate (3) and/or the material of the second clamping plate (4) and/or the material of the clamping element (5) is a ceramic material.

5. Fuel cell assembly (1) according to claim 4, wherein the ceramic material is a ceramic matrix composite, which preferably includes a matrix of aluminum oxide, zirconium oxide, yttrium oxide-stabilized zirconium dioxide, or silicon carbide.

6. Fuel cell assembly (1) according to one of the previous claims, the first clamping plate (3) and/or the second clamping plate (4) and/or the clamping element (5) are made of a material having a thermal expansion coefficient in the range from 1 × 10⁻⁶/K to 20 × 10⁻⁶/K, particularly from 5 × 10⁻⁶/K to 13 × 10⁻⁶/K.

7. Fuel cell assembly (1) according to any one of the preceding claims, wherein the fuel cell assembly (1) further comprises a first force transmission plate (6) arranged between the fuel cell stack (2) and the first clamping plate (3) and/or a second force transmission plate (7) arranged between the fuel cell stack (2) and the second clamping plate (4).

8. Fuel cell assembly (1) according to claim 3 and 7, wherein the first force transmission plate (6) has the same thermal expansion coefficient as the first clamping plate (3) and/or the second force transmission plate (7) has the same thermal expansion coefficient as the second clamping plate (4).

9. Fuel cell assembly (1) according to claim 7 or 8, wherein the first clamping plate (3) is in direct contact with the first force transmission plate (6) and/or the second clamping plate (4) is in direct contact with the second force transmission plate (7).

10. Fuel cell assembly (1) according to any one of claims 7 to 9, wherein the first force transmission plate (6) has an inner surface facing an upper surface of the fuel cell stack (2) and the second force transmission plate (7) has an inner surface facing a lower surface of the fuel cell stack (2), wherein the inner surface of the first force transmission plate (6), the inner surface of the second force transmission plate (7), the upper surface of the fuel cell stack (2) and the lower surface of the fuel cell stack (2) are essentially parallel to each other.

11. Fuel cell assembly (1) according to any one of claims 7 to 10, wherein the first force transmission plate (6) is in direct contact with the fuel cell stack (2) and/or the second force transmission plate (7) is in direct contact with the fuel cell stack (2).

12. Fuel cell assembly (1) according to any one of claims 7 to 10, wherein the fuel cell assembly (1) further comprises a first intermediate layer (13) and/or a second intermediate layer (14), wherein the first intermediate layer (13) is arranged between the first force transmission plate (6) and the fuel cell stack (2) and the second intermediate layer (14) is arranged between the second force transmission plate (7) the fuel cell stack (2), wherein the first intermediate layer (13) and the second intermediate layer (14) each comprise a mica sheet.

13. Fuel cell assembly (1) according to any one of the previous claims, wherein the fuel cell assembly (1) further comprises at least one thermal expansion adjustment plate (15) configured to maintain a designated clamping force on the fuel cell stack (2), wherein the at least one thermal expansion adjustment plate (15) is
- arranged between the clamping element (5) and the first clamping plate (3);
- arranged between the clamping element (5) and the second clamping plate (4);
- comprised in the first intermediate layer (13) according to claim 12; and/or
- comprised in the second intermediate layer (14) according to claim 12.

14. Fuel cell assembly (1) according to any one of the preceding claims, wherein the first clamping plate (3) and/or the second clamping plate (4) are planar, convex or concave with respect to the fuel cell stack (2).

15. Fuel cell assembly (1) according to one of the previous claims, wherein the fuel cells include one or more of the following: solid oxide fuel cell, molten carbonate fuel cell, phosphoric acid fuel cell, proton-exchange membrane fuel cell and alkaline fuel cell, preferably solid oxide fuel cell.

16. Fuel cell assembly (1) according to any of the previous claims, wherein the fuel cell stack (2), the first clamping plate (3), the second clamping plate (4) and the at least one clamping element (5) are arranged inside an insulation housing (8) for thermally insulating the fuel cell stack (2).

17. Fuel cell assembly (1) according to claim 16, wherein the insulation housing (8) has a density of less than 400 kg/m³, preferably less than 300 kg/m³, more preferably less than 275 kg/m³.
